Europäisches Patentamt

(19) European Patent Office

Office européen des brevets

(11) Numéro de publication: **0 100 702**
**B1**

## (12) FASCICULE DE BREVET EUROPEEN

(45) Date de publication du fascicule du brevet:
**17.09.86**

(21) Numéro de dépôt: **83401353.4**

(22) Date de dépôt: **30.06.83**

(51) Int. Cl.⁴: **E 21 B 7/14,** B 23 K 7/08,
B 23 K 7/10

(54) Dispositif pour l'allumage de lances à oxygène.

(30) Priorité: **05.07.82 FR 8211750**

(43) Date de publication de la demande:
**15.02.84 Bulletin 84/7**

(45) Mention de la délivrance du brevet:
**17.09.86 Bulletin 86/38**

(84) Etats contractants désignés:
**AT BE CH DE GB IT LI LU NL SE**

(56) Documents cités:
**EP - A - 0 007 289**
**WO - A - 83/01480**
**DE - A - 2 300 265**
**GB - A - 668 393**
**US - A - 3 507 230**

(73) Titulaire: **ETIENNE LACROIX - TOUS ARTIFICES SA,**
**Route de Toulouse, F-31600 Muret (FR)**

(72) Inventeur: **Mirquet, Georges Hubert, 2, rue des Bleuets,**
**F-31270 Cugnaux (FR)**
Inventeur: **Groc, Philippe Gilles Henry, 7, rue St.**
**Exupéry, F-32000 Auch (FR)**
Inventeur: **Vayssie, François Jean-Claude, Chemin du**
**Luxembourg Le Fauga, F-31410 Noe (FR)**

(74) Mandataire: **Martin, Jean-Jacques et al, Cabinet**
**REGIMBEAU 26, Avenue Kléber, F-75116 Paris (FR)**

ACTORUM AG

## Description

La présente invention concerne l'allumage des lances à oxygène.

La présente invention concerne plus précisément un dispositif perfectionné pour l'allumage des lances à oxygène.

De façon classique en soi, les lances à oxygène sont constituées par un tube en acier ou en fer, rempli partiellement de fils ou joncs pleins en acier ou en fer, emmanchés dans la lance. L'alimentation en oxygène de la lance, est effectuée au niveau d'une extrémité de celle-ci, ainsi un jet d'oxygène sous pression, véhicule à l'intérieur du tube est amené au niveau de l'autre extrémité du tube sur un objet que l'on désire par exemple percer ou couper, la combustion du tube et des joncs dans l'oxygène dégageant une quantité de chaleur, utilisée par exemple pour provoquer la fusion de métaux, de béton armé ou non, et de roches, notamment sous l'eau. Les produits de la fusion sont chassés par le jet d'oxygène.

L'allumage des lances à oxygène était effectué, à l'origine en chauffant la lance à son extrémité avant, située près de l'objet à travailler, à l'aide, par exemple, d'un chalumeau oxhydrique, en même temps qu'on fait arriver de l'oxygène au niveau de ladite extrémité du tube. De façon analogue, on sait allumer les lances à oxygène, en portant l'extrémité de celles-ci en contact avec du charbon de bois incandescent ou de la braise de bois. Il s'avère toutefois qu'un tel procédé d'allumage est incommode à mettre en œuvre et relativement long. Ce procédé ne peut donc donner satisfaction, surtout lorsque la lance à oxygène doit être allumée relativement souvent. En outre, un tel procédé exige, lorsqu'il doit être mis en œuvre sous l'eau, l'emploi d'une électrode ou d'un chalumeau spécial.

Comme cela est décrit dans le brevet Français n° 1 002 142, on a déjà proposé un dispositif allumeur pour lances à oxygène, formant une cartouche d'allumage par percussion qui comprend une cartouche centrale d'allumage mise à feu lors de la percussion d'un chapeau formant percuteur, ladite cartouche centrale d'allumage communicant le feu à un bourrage en paille de fer qui entoure la cartouche. Le courant d'oxygène amené par le tube active fortement la combustion de la paille de fer. Le dispositif décrit dans ce brevet a permis de simplifier très notablement le procédé antérieurement existant. Toutefois, il s'avère dans la pratique, que ce procédé ne donne pas pleinement satisfaction, en raison du fait notamment que l'allumage de la lance à oxygène reste trop lent. Un dispositif généralement similaire est défini dans le brevet GB-A-668 393.

Comme cela est décrit dans le brevet Français n° 2 348 900, on a proposé un autre procédé d'allumage de lances à oxygène, consistant à amener l'extrémité de la lance en contact avec un élément en combustion formé de particules de magnésium. Ce procédé permet certes d'effectuer l'allumage rapide des lances à oxygène, cependant il s'avère relativement compliqué à mettre en œuvre,

et ne peut être utilisé en aucune façon sous l'eau.

Enfin, comme cela est décrit dans la demande de brevet Européen publiée sous le n° 7 289 on a proposé différents autres types de cartouches pour l'allumage d'une lance à oxygène. En particulier, comme cela est représenté sur la figure 3 de cette demande de brevet, on a proposé de disposer à l'intérieur du corps d'une cartouche, une amorce comprenant un élément constitué par une substance qui s'enflamme spontanément en présence d'oxygène, telle que du zinc diéthyle. La substance est ainsi enfermée dans une enveloppe étanche, qui doit être perforée lors de la percussion, pour mettre le zinc diéthyle en présence de l'oxygène amené par le passage axial traversant la lance. Là encore on a constaté sur le plan pratique qu'une telle cartouche ne pouvait donner satisfaction. En particulier, il s'avère relativement difficile de régler correctement le débit d'oxygène permettant d'assurer de façon optimum, la combustion de l'élément combustible situé à proximité de l'amorce.

Pour ces raisons, malgré les nombreuses recherches effectuées dans le domaine de l'allumage des lances à oxygène, les dispositifs jusqu'ici proposés n'ont donc pas donné pleinement satisfaction.

Le besoin se fait donc sentir, sur le marché, de posséder des dispositifs qui soient à la fois de réalisation simple, robuste et économique, qui puissent être utilisés sous l'eau, et qui permettent un allumage extrêmement rapide de la lance à oxygène.

Allant à l'encontre des idées préconçues qui voulaient que le courant d'oxygène amené par la lance, soit provoque directement, soit active fortement la combustion du corps combustible, dès l'initialisation de l'inflammation, la présente invention vient proposer un nouveau dispositif pour l'allumage d'une lance à oxygène, du type formé d'un corps présentant une extrémité susceptible d'ouverture pour être enfilé sur l'extrémité de la lance et qui comprend un élément combustible et des moyens aptes à provoquer, l'inflammation de l'élément combustible; le dispositif conforme à la présente invention comporte plus précisément un conteneur logé axialement dans le corps et fermé de façon étanche à ses deux extrémités, pour contenir un premier composé chimique, un réservoir étanche contenant un second composé chimique apte à réagir avec le premier, en produisant une inflammation, lorsqu'il vient en contact avec celui-ci, et un organe de perforation susceptible de translation axiale relative par rapport au conteneur et/ou réservoir et apte à perforer une paroi du conteneur et dudit réservoir étanche, pour mettre en contact les premier et second composés chimiques, lors du déplacement, et notamment lorsque la lance à oxygène recouverte du dispositif est frappée sur un obstacle.

Selon une caractéristique de la présente invention, l'un des composés chimiques est un oxydant; et plus précisément le premier composé chimique est une poudre oxydante.

Selon une caractéristique importante de la présente invention, le conteneur ou le réservoir, contiennent en outre un catalyseur pour favoriser la combustion desdits composés chimiques et accélérer l'allumage de la lance à oxygène.

Selon une première variante de réalisation, le conteneuer est obturé, du côté opposé à l'extrémité du corps par laquelle la lance est engagée, par une cape en matière synthétique, qui obture également l'extrémité correspondante du corps, de l'autre côté, par un disque solidaire de l'organe de perforation, ce dernier possédant une portion qui s'étend axialement dans le conteneur et se termine en biseau au voisinage de ladite cape en matière synthétique.

Selon un mode de réalisation avantageux conforme à la présente invention, le réservoir est constitué d'un organe séparé adapté pour être vissé sur le corps en regard de la cape en matière synthétique, et l'extrémité du réservoir adjacente, en position assemblée, à cette cape en matière synthétique, est constituée d'un bouchon en matière synthétique muni de préférence d'une amorce de découpe.

Selon la première variante de réalisation, l'organe de perforation constitue un piston de perforation déplaçable dans le corps.

Selon une seconde variante de réalisation, le réservoir est réalisé dans le corps, à l'opposé de l'extrémité susceptible d'ouverture et est obturé, côté intérieur du corps, par un bouchon en matière synthétique, tandis que le conteneur est monté déplaçable dans le corps et est obturé par une cape en matière synthétique à son extrémité adjacente au réservoir, et que l'organe de perforation est porté fixe dans le réservoir.

Le composé chimique oxydant est de préférence du Permanganate de Potassium.

Le catalyseur est de préférence du Bioxyde de Baryum.

Le second composé chimique est de préférence un polyol, tel que de l'éthylène glycol.

Selon un mode de réalisation particulier de la présente invention, l'extrémité du corps par laquelle la lance à oxygène est introduite, est obturée initialement à l'aide d'un bouchon étanche amovible.

Selon un autre mode de réalisation particulier, l'extrémité du corps par laquelle la lance à oxygène est introduite, est munie d'une bague de fixation de la lance dont le diamètre interne est adapté au diamètre extérieur de la lance.

D'autres caractéristiques et avantages de la présente invention apparaîtront à la lecture de la description détaillée qui va suivre, et en regard des dessins annexés donnés à titre d'exemple non limitatif, qui doivent être considérés comme incorporés à la description par la référence qui leur est faite ici, et sur lesquels:

– la figure 1 représente une vue en coupe axiale d'une première variante de réalisation d'un dispositif conforme à la présente invention, installé sur l'extrémité d'une lance à oxygène, et prêt à être percuté,

– la figure 2 représente une vue en coupe axiale d'un bouchon d'obturation de l'extrémité du dispositif par laquelle la lance à oxygène est introduite, selon un premier mode de réalisation conforme à la présente invention,

– la figure 3 représente une vue en coupe axiale d'un bouchon d'obturation de l'extrémité du corps par laquelle la lance à oxygène est introduite, selon un second mode de réalisation conforme à la présente invention,

– la figure 4 représente une vue en coupe axiale d'un réservoir conforme à la première variante de réalisation de la présente invention, représentée sur la figure 1,

– la figure 5 représente schématiquement les étapes de mise en œuvre du dispositif conforme à la première variante de réalisation de la présente invention, représenté sur la figure 1,

– la figure 6 représente une vue en coupe axiale d'une seconde variante de réalisation d'un dispositif conforme à la présente invention.

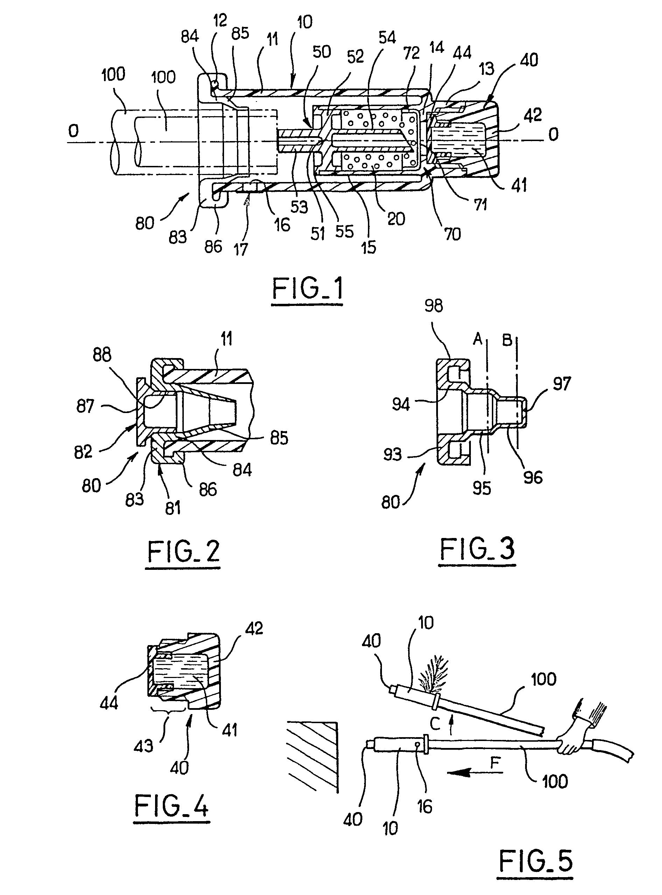

On va décrire dans un premier temps le mode de réalisation représenté sur la figure 1.

Comme cela est représenté sur la figure 1, le dispositif pour l'allumage d'une lance à oxygène conforme à la présente invention se compose d'un corps 10 généralement cylindrique, obturé initialement à l'une de ses extrémités, par laquelle la lance à oxygène 100 est destinée à être introduite, à l'aide d'un obturateur amovible référencé 80, le corps 10 étant obturé à son autre extrémité, au niveau de laquelle il est destiné à recevoir un réservoir 40 (comme cela est représenté sur la figure 1), par une cape en matière synthétique.

Plus précisément, comme cela est représenté sur la figure 1, le corps 10 se compose d'une enveloppe de forme générale cylindrique 11 présentant un diamètre interne supérieur au diamètre extérieur des lances à oxygène 100 avec lesquelles le dispositif est destiné à coopérer, de telle sorte que l'enveloppe 11 est enfilée sur l'extrémité de celles-ci. Comme cela apparaîtra plus clairement à la lecture de la suite de la description, on a représenté schématiquement en traits mixtes, sur la figure 1, deux extrémités de lance à oxygène 100 présentant des diamètres différents.

L'axe de l'enveloppe cylindrique a été référencé O–O sur la figure 1.

L'enveloppe cylindrique 11 présente sur sa périphérie extérieure, du côté de l'extrémité par laquelle les lances à oxygène 100 sont destinées à être introduites, une nervure annulaire 12 destinée à recevoir un obturateur amovible 80 comme cela sera décrit plus en détail dans la suite de la description.

A l'extrémité opposée, l'enveloppe cylindrique 11 se prolonge par une section cylindrique 13 coaxiale, de plus faible diamètre, filetée intérieurement. Au niveau de la jonction entre ladite section cylindrique 13 et l'enveloppe 11, il est prévu sur la périphérie interne de celle-ci une nervure annulaire 14 servant de portée d'appui pour la cape en matière synthétique 70, comme cela apparaît sur la figure 1. De plus, il est prévu à l'intérieur de l'enveloppe cylindrique 11, une chemise cylindrique intérieure 15, qui lui est coaxiale, et qui se raccorde à celle-ci au niveau de la nervure annulaire 14 précitée. Ladite chemise cylindrique intérieur 15 possède une longueur sensiblement égale à la moitié de celle de l'enveloppe cylindrique 11.

Comme cela est représenté sur la figure 1, une cape en matière synthétique 70, en forme de cuvette, est disposée dans le fond de ladite chemise cylindrique intérieure 15, en appui contre la nervure annulaire 14. Plus précisément, la cape 70 en matière synthétique en forme de cuvette, se compose d'un disque 71, qui vient en appui contre ladite nervure annulaire 14, et d'un rebord cylindrique 72, en saillie perpendiculairement sur ce disque, et dont la surface extérieure s'appuie sur la périphérie interne de la chemise cylindrique intérieure 15, en épousant la forme de celle-ci. On comprend qu'ainsi ladite cape en matière synthétique 70 obture de façon étanche l'une des extrémités de la chemise cylindrique 15.

D'autre part, il est prévu dans ladite chemise cylindrique intérieure 15, un piston de perforation 50. Le piston de perforation 50 se compose d'un disque 51 perpendiculaire à l'axe O–O, du corps 10 du dispositif. Le disque 51 présente un diamètre extérieur sensiblement égal au diamètre intérieur de la chemise cylindrique 15. De plus, le disque 51 est muni sur sa périphérie d'un cylindre 52 qui vient en appui étanche contre la surface périphérique interne de la chemise cylindrique 15. Le disque 51 du piston perforateur 50, est disposé à l'intérieur de la chemise 15, à l'opposé de la cape en matière synthétique 70 précitée, de telle sorte qu'il est défini, à l'intérieur de la chemise cylindrique 15, et entre la cape en matière synthétique 70 et le disque 51, un conteneur ou volume parfaitement étanche destiné à contenir un premier composé chimique 20 schématiquement représenté sur la figure 1.

Le disque 51 du piston perforateur 50 est muni du côté de la nervure annulaire 12, d'une section cylindrique creuse 53, de diamètre inférieur, coaxiale à l'axe O–O du dispositif et sur l'extrémité de laquelle est destinée à venir en appui la lance à oxygène 100, comme cela est représenté sur la figure 1. De l'autre côté, c'est-à-dire du côté de la nervure annulaire 14, le disque 51 du piston perforateur 50 est muni d'une seconde section 54 également cylindrique et de diamètre inférieur et coaxiale à l'axe O–O du dispositif, et qui se termine en biseau. De préférence, cette section 54 est munie d'une pluralité d'orifices ménagés dans sa paroi, destinés à faciliter ultérieurement la mise en contact des premier et second composés chimiques. La longueur de cette section 54 est déterminée de telle sorte que, en position de stockage, tel que cela est représenté sur la figure 1, l'extrémité en biseau de cette section 54 se situe au voisinage de ladite cape en matière synthétique 70, sans être en contact avec celle-ci.

De plus, comme cela est schématiquement représenté sur la figure 1, le cylindre 52 disposé sur l'extérieur du disque 51 du piston perforateur 50 est de préférence muni de quatre ergots 55, en saillie vers l'extérieur, et régulièrement répartis sur sa périphérie, du côté de la première section 53.

Ainsi, les quatre ergots 55 sont destinés à venir en appui contre l'extrémité de la chemise cylindrique intérieure 15, de façon à interdire en position de stockage, lors par exemple d'une chute accidentelle, la pénétration du piston perforateur 50, à l'intérieur de ladite chemise 15, qui provoquerait inévitablement la perforation de la cape en matière synthétique 70, grâce à l'extrémité biseautée de la seconde section 54 du piston, et par le fait même l'écoulement du composé chimique 20 contenu dans la chemise 15.

Pour éviter tout risque de mise à feu accidentelle, le corps 10 contenant un premier composé chimique, et le réservoir 40 contenant un second composé chimique 41 apte à réagir avec le premier en produisant une inflammation, lorsqu'il vient en contact avec celui-ci, sont stockés séparément. On a ainsi représenté sur la figure 4, le réservoir 40 séparé.

Comme cela apparaît sur cette figure 4, le réservoir 40 se compose d'un bouchon cylindrique creux. Plus précisément le bouchon cylindrique creux 40 se compose d'une paroi discoïde 42, et d'une paroi cylindrique raccordée perpendiculairement à celle-ci. Cette paroi cylindrique présente du côté opposé à la paroi discoïde 42, une section 43 de plus faible diamètre, filetée extérieurement. En outre, cette même section 43 est filetée intérieurement sur une partie de sa longueur, de telle sorte qu'un bouchon 44 en matière synthétique puisse être vissé sur le réservoir 40, au niveau du filetage intérieur de celui-ci, de façon à définir ainsi un volume ou réservoir étanche contenant le second composé chimique 41.

Pour rendre utilisable le dispositif conforme à la présente invention, on comprend qu'il suffit de visser le réservoir 40 au niveau de la section 13 du corps 10 prévu à cet effet, comme cela est représenté sur la figure 1.

Bien entendu l'assemblage du réservoir 40 sur le corps 10, et du bouchon en matière synthétique 44 sur le réservoir 40, pourra être fait par tout autre moyen classique approprié.

De préférence, le bouchon en matière synthétique 44 assemblé sur le réservoir 40 est muni d'une amorce de découpe.

Comme cela est également représenté sur la figure 1, l'enveloppe 11 est munie d'un orifice de passage d'oxygène 16 qui est obstrué initialement à l'aide d'un disque adhésif d'étanchéité 17 disposé sur l'extérieur de l'enveloppe cylindrique 11.

Comme cela est représenté sur la figure 2, l'enveloppe cylindrique 11 est obturée, initialement du côté de la nervure annulaire 12, à l'aide d'un manchon souple 81 équipé d'un bouchon d'étanchéité 82. Plus précisément, comme cela est représenté sur la figure 2, le manchon souple 81 se compose d'une couronne 83 raccordée à une jupe cylindrique 84, qui se prolonge elle-même par une jupe tronconique 85, cette dernière se rétrécissant en éloignement de la couronne 83. De plus, cette couronne 83 est munie, sur sa périphérie extérieure d'une collerette 86 qui est destinée (comme cela est représenté sur la figure 2) à chevaucher la nervure annulaire 12 prévue sur l'enveloppe cylindrique 11, de façon à assurer l'immobilisation du manchon souple 81 sur celle-ci. Le bouchon d'étanchéité 82 est composé d'une paroi discoïde 87, prolongée d'une paroi cylindrique 88 présentant un diamètre extérieur sensiblement supérieur au diamètre intérieur de la jupe cylindrique 84 précitée. Ainsi, lorsque le bouchon d'étanchéité 82 est emmanché à force dans le manchon souple 81, et que ce dernier est lui-même disposé sur l'enveloppe cylindrique 11, en position de stockage, le volume intérieur de l'enveloppe cylindrique 11 se trouve parfaitement isolé de l'extérieur.

Lors de l'utilisation, il suffit de retirer le bouchon d'étanchéité 82 et d'introduire l'extrémité de la lance à oxygène dans le manchon souple 81, pour que la jupe tronconique 85, dont les parois sont de préférence amincies en direction de l'extrémité de celle-ci, se déforme et s'applique étroitement sur la périphérie extérieure de la lance à oxygène 100, comme cela est représenté sur la figure 1. On comprend qu'ainsi, le dispositif conforme à la présente invention, peut coopérer avec des lances à oxygène 100 présentant des diamètres différents.

On a représenté sur la figure 3 un autre mode de réalisation de l'obturateur 80. Selon le mode de réalisation représenté sur cette figure 3, l'obturateur se compose d'une couronne 93 raccordée à une jupe cylindrique 94, elle-même raccordée à l'opposé de la couronne 93, à deux jupes cylindriques 95 et 96 de diamètre décroissant. La jupe cylindrique 96 de plus petit diamètre est obturée à son extrémité opposée à la couronne 93, par une paroi extrême transversale discoïde 97. De façon analogue au manchon souple 81 représenté sur la figure 2, la couronne 93 de l'obturateur représenté sur la figure 3 est munie sur sa périphérie extérieure d'une collerette 98 destinée à chevaucher la nervure annulaire 12 prévue sur l'enveloppe cylindrique 11, pour assurer l'immobilisation de l'obturateur 80 sur le corps 10 du dispositif.

Selon cette variante de réalisation, il est nécessaire dans un premier temps d'extraire l'obturateur 80 hors de l'enveloppe cylindrique 11, et de découper celui-ci selon le plan de coupe référencé A ou B sur la figure 3, selon que la lance à oxygène 100 présente un diamètre plus ou moins grand, puis de remettre en place l'obturateur 80 sur l'extrémité de l'enveloppe cylindrique 11 et d'introduire la lance à oxygène 100 dans l'obturateur 80.

Bien entendu, on peut également prévoir que selon la variante de l'obturateur 80 représenté sur la figure 2, il est prévu en outre une paroi transversale discoïde au niveau de l'extrémité de la jupe tronconique 85 opposée à la couronne 83 et raccordée à celle-ci suivant une ligne de prédécoupe, de telle sorte que, par simple poussée de la lance à oxygène 100, la paroi discoïde 97 soit séparée de la jupe tronconique 85. Une telle disposition est intéressante en particulier pour l'utilisation sous l'eau. Elle évite en effet que de l'eau pénètre à l'intérieur de l'enveloppe cylindrique 11 lors de l'introduction de la lance à oxygène 100.

De préférence, la totalité des éléments composants le dispositif conforme à la présente invention sont constitués de matières synthétiques, de telle sorte que ceux-ci puissent être consumés au moins partiellement lors de l'allumage de la lance à oxygène.

Toutefois, les caractéristiques mécaniques et thermiques du manchon souple 81 représenté sur la figure 2, ou de l'obturateur 80 représenté sur la figure 3, sont déterminées de préférence de telle sorte que celui-ci assure le maintien du dispositif d'allumage sur l'extrémité de la lampe à oxygène 100 pendant une vingtaine de secondes, et ce pour une pression d'arrivée d'oxygène de l'ordre de 8 bars.

Le premier composé chimique 20 contenu dans la chemise cylindrique 15 est de préférence une poudre oxydante, et le second composé chimique 41 contenu dans le réservoir 40 est un liquide réactif apte à réagir avec ladite poudre oxydante 20.

Selon une caractéristique importante de la présente invention, il est de plus prévu un catalyseur permettant d'accélérer très notablement l'allumage de la lance à oxygène 100.

Ainsi, selon un mode de réalisation considéré préférentiel par la Demanderesse, la poudre oxydante 20 est formée de permanganate de potassium, le liquide réactif 41 est un polyol, tel que de l'éthylène glycol, ou tout autre produit analogue tel que de la glycérine, ou du méthyléthyléthylèneglycol ou diéthylène glycol monoéthyl éther ou diéthylène glycol monométhyl éther ou éthoxyéthanol, et le catalyseur est du bioxyde de baryum, logé avec le liquide réactif à l'intérieur du réservoir 40.

Bien entendu, la disposition de la poudre oxydante et du liquide réactif peut être inversée, et de même, le catalyseur peut être stocké avec la poudre oxydante et non point avec le liquide réactif.

On va maintenant décrire les différentes étapes de mise en œuvre du dispositif d'allumage d'une lance à oxygène conforme à la présente invention, tel que représenté sur la figure 1.

Il convient dans un premier temps de visser le réservoir 40 sur la portion 13 du corps 10 prévu à cet effet. La lance à oxygène 100 est alors introduite dans le manchon souple 81 après retrait du bouchon d'étanchéité 82 (figure 2) ou dans l'obturateur après découpe de celui-ci (figure 3), selon le mode de réalisation retenu. Comme cela est représenté sur la figure 1, l'extrémité de la lance à oxygène 100 est ainsi amenée en contact de la première section 53 du piston perforateur 50. La sécurité, lors de l'introduction de la lance est assurée à l'aide des quatre ergots 55, aménagés sur la périphérie du piston de perforation 50. L'alimentation de l'oxygène est alors ouverte, et la pression réglée aux alentours de 1,5 bar.

Comme cela est schématiquement représenté par la flèche référencée F sur la figure 5, sur laquelle on aperçoit l'extrémité d'une lance à oxygène 100 équipée d'un corps 10 du dispositif d'allumage muni d'un réservoir 40, il convient alors de frapper violemment l'extrémité de la lance à oxygène contre un obstacle dur quelconque. Sous l'action de la lance à oxygène 100 en appui contre le piston perforateur 50, celui-ci se déplace axialement dans la chemise 15, découpe les ergots 55 de sécurité et vient perforer la cape en matière synthétique 70, ainsi que le bouchon 44 vissé sur le réservoir 40. Le liquide réactif 41 est ainsi mis en contact avec la poudre oxydante 20 et réagit sur celle-ci en provoquant son inflammation. Comme cela est représenté schématiquement sur la figure 5 par la flèche référencée C, il convient alors de basculer vers le haut la lance à oxygène et de maintenir celle-ci en position inclinée pendant la réaction chimique. L'effet thermique ainsi obtenu par combustion de la poudre oxydante, permet l'allumage de la lampe à oxygène en milieu ambiant ou en milieu sous-marin.

La Demanderesse a ainsi constaté qu'un dispositif pour l'allumage d'une lance à oxygène conforme à la présente invention permettait d'assurer l'allumage en quelques secondes, au lieu de quelques minutes comme c'était le cas avec les dispositifs antérieurement existants.

Comme cela est représenté sur la figure 5, l'orifice 16 des passage à oxygène permet l'échappement des gaz portés à haute température.

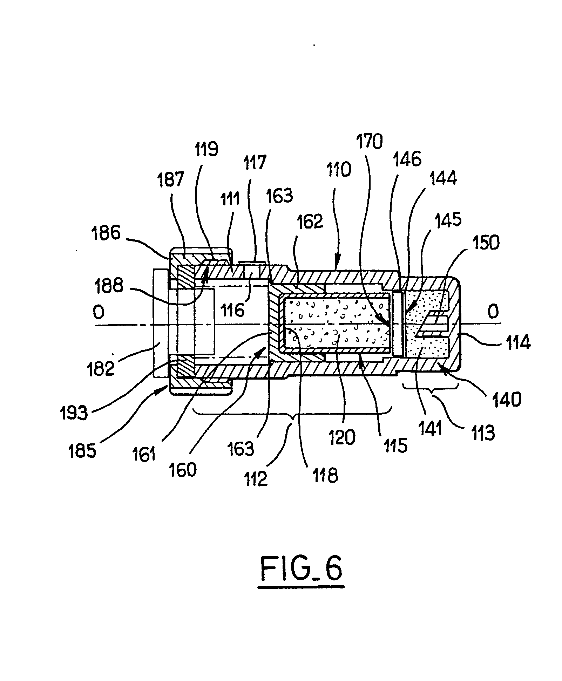

On va maintenant décrire la seconde variante de réalisation d'un dispositif conforme à la présente invention, pour l'allumage d'une lance à oxygène, tel que représenté sur la figure 6.

Comme cela est représenté sur la figure 6, le dispositif pour l'allumage d'une lance à oxygène se compose d'un corps 110 généralement cylindrique, dont l'enveloppe 111 présente deux sections coaxiales 112 et 113.

Plus précisément, la première section 112, par l'une des extrémités de laquelle est destinée à être introduite la lance à oxygène (non représentée sur la figure 6) est munie d'un orifice 116 de passage d'oxygène, qui est obstrué initialement à l'aide d'un disque adhésif d'étanchéité 117 disposé sur l'extérieur de l'enveloppe cylindrique 111.

Ladite première section 112, se prolonge à l'opposé de son extrémité par laquelle la lance à oxygène est introduite, par une seconde section 113 de plus faible diamètre. Cette dernière section 113 est obturée, à l'opposé de la première section 112 par une paroi 114 transversale de forme générale discoïde.

Ainsi, ladite seconde section 113 et la paroi 114 précitées, délimitent en combinaison avec un bouchon 144 réalisé de préférence en matière synthétique, ledit réservoir étanche 140 apte à contenir le second composé chimique 141.

Plus précisément, tel que cela est représenté sur la figure 6, le bouchon 144 se compose d'une paroi discoïde 145, qui s'étend sensiblement perpendiculairement à l'axe longitudinal O–O du dispositif, et d'une paroi cylindrique 146, raccordée perpendiculairement à la paroi 145. Ladite paroi 146 s'étend à l'opposé du réservoir 140, et s'applique étroitement contre la paroi interne de la seconde section 113 de l'enveloppe 111, de façon à obturer de façon étanche ledit réservoir 140.

De préférence, la paroi 145 du bouchon 144, en matière synthétique, est munie d'une amorce de découpe.

D'autre part, comme cela apparaît toujours sur la figure 6, un organe de perforation 150, formant corps avec la paroi transversale 114 précitée, est raccordé perpendiculairement à celle-ci.

Plus précisément, l'organe de perforation fixe 150 est constitué d'un élément cylindrique coaxial avec le dispositif d'allumage, et qui se termine en biseau au niveau de son extrémité libre, au voisinage du bouchon 144, sans pour autant être en contact avec celui-ci.

Tel que cela apparaît toujours sur la figure 6, le conteneur 115 destiné à contenir le premier composé chimique 120 se compose d'une enveloppe cylindrique d'axe O–O fermée à l'une de ses extrémités (opposée au réservoir 140) par une paroi transversale discoïde 118, formant corps avec celle-ci. Ledit conteneur 115 est obturé, au niveau de son extrémité adjacente au réservoir 140, par une cape en matière synthétique 170, raccordée de façon étanche à l'enveloppe du conteneur 115 par tous moyens appropriés. Tel que cela est représenté sur la figure 6, la cape 170 peut être raccordée au conteneur 115 par collage.

Bien entendu, ladite cape 170 peut également être raccordée au conteneur 115 par tout autre moyen tel que par filetage.

De plus, le conteneur 115 est associé à un système de butées 160.

Tel que cela est représenté sur la figure 6, un tel système de butées 160 peut être constitué par une paroi transversale discoïde 161, sur laquelle se raccorde perpendiculairement une section cylindrique 162. La paroi discoïde 161 est munie sur sa périphérie extérieure, d'une pluralité d'ergots 163 régulièrement répartis sur sa périphérie. Les ergots 163 sont destinés à venir en appui contre une surface radiale ménagée sur la périphérie interne de la première section 112 de l'enveloppe 111, et dirigés vers l'extrémité de celle-ci par laquelle la lance à oxygène est destinée à être introduite. La paroi 161 est munie d'orifices permettant le passage des gaz.

Le conteneur 115 étant introduit dans la section cylindrique 162 en contact avec la paroi discoïde 161, et immobilisé dans cette position par tous moyens appropriés, tels que par collage ou un emmanchement à force, on comprend que les ergots 163 limitent la translation du conteneur 115 à l'intérieur du corps 110, de façon à éviter que la cape 170 ne vienne, de façon non intentionnelle, en contact avec le bouchon 144.

Bien entendu, le système de butées 160 et le conteneur 115 peuvent être constitués d'un bloc unique, les ergots 163 étant ménagés directement sur le conteneur 115.

De même, le système de butées 160 peut être constitué de deux nervures rectilignes, raccordées perpendiculairement entre elles et présentant au niveau de leurs extrémités lesdits ergots 163, ainsi que de prolongements axiaux, tels que les éléments 162 représentés sur la figure 6. Là encore, le conteneur 115 est destiné à être introduit entre les prolongements 162, jusqu'à venir en contact

avec les nervures rectilignes, et à être immobilisé sur ce système.

En outre, tel que cela est également représenté sur la figure 6, le corps 110 est muni sur sa périphérie extérieure, au niveau de son extrémité par laquelle est destinée à être introduite la lance à oxygène, d'un filetage extérieur 119 apte à recevoir un bouchon de fermeture 185.

Plus précisement, ledit bouchon de fermeture 185 se compose d'une couronne 186 sur laquelle se raccorde perpendiculairement, une section cylindrique 187 munie d'un filetage interne 188 apte à coopérer avec le filetage externe 119 précité de l'enveloppe 111.

Tel que cela est représenté sur la figure 6, le bouchon de fermeture 185 a pour but d'immobiliser entre sa couronne 186 et la surface radiale extrême de l'enveloppe 111, une bague 193 de fixation de la lance à oxygène 100, dont le diamètre interne est adapté au diamètre extérieur de la lance à oxygène 100 de façon à immobiliser correctement celle-ci.

Une telle bague de fixation 193 peut être réalisée par exemple en élastomères.

Enfin, l'ensemble se complète d'un bouchon amovible 182 tel que le bouchon amovible 82 décrit précédemment en regard de la figure 2.

L'ensemble du descriptif relatif aux premier et second composés chimiques, en regard du premier mode de réalisation, est bien entendu également applicable au second mode de réalisation représenté sur la figure 6.

De préférence, pour des raisons notamment de sécurité, le conteneur 115 est stocké séparément du corps 110 contenant le réservoir 140 rempli du second composé chimique 141.

Accessoirement, l'enveloppe 111 du corps 110 peut être obturée initialement par un obturateur analogue à l'obturateur 80 décrit en regard des figures 1 à 3.

On va maintenant décrire les différentes étapes de mise en œuvre du dispositif d'allumage d'une lance à oxygène conforme à la présente invention, telle que représentée sur la figure 6.

Dans un premier temps, il convient d'introduire le conteneur 115 à l'intérieur de l'enveloppe 111, jusqu'à ce que les ergots 163 précités viennent en appui contre la surface radiale prévue à cet effet sur la périphérie interne de la première section 112.

Une bague de fixation 193 dont le diamètre est adapté au diamètre extérieur de la lance à oxygène 100 est alors fixée sur l'enveloppe 111 grâce au bouchon de fermeture 185. La lance à oxygène est introduite dans l'enveloppe 111, en contact avec le conteneur 115. La sécurité, lors de l'introduction de la lance est assurée par les ergots 163. L'alimentation de l'oxygène est ouverte et la pression réglée de façon appropriée.

Là encore, il convient de frapper alors violemment l'extrémité de la lance à oxygène recouverte de l'enveloppe 111, contre un obstacle quelconque. Grâce au cisaillement des ergots 163, le conteneur 115 est déplacé en translation dans l'enveloppe 111, et vient en appui contre le bouchon 144. Ce dernier est alors également déplacé contre l'organe de perforation 150.

Le bouchon 144 et la cape 170 étant perforés, les deux composés chimiques réagissent entre eux et provoquent l'inflammation de la lance.

De préférence, de façon à faciliter le déplacement du bouchon 144, le réservoir 140 n'est pas complètement rempli, de telle sorte que la compression initiale de l'air contenu dans celui-ci autorise le déplacement du bouchon 144.

Par rapport au dispositif représenté sur la figure 1 et précédemment décrit, la Demanderesse a constaté que lors de l'utilisation d'un tel dispositif, le liquide réactif contenu de préférence dans le réservoir 140 est soumis à une pression importante, lors de la percussion de la lance à oxygène, ce qui favorise sa diffusion vers la poudre oxydante, et accélère sensiblement la réaction.

Lorsqu'il est indispensable d'utiliser le dispositif pour l'allumage d'une lance à oxygène, sous l'eau, il est possible de préparer le dispositif selon la figure 6, en dehors de l'eau, et de munir celui-ci d'un obturateur 182, présentant une paroi transversale discoïde munie d'une ligne de prédécoupe, de telle sorte que, par simple poussée de la lance à oxygène 100, la paroi discoïde soit séparée de l'obturateur 182.

Là encore, de préférence, la totalité des éléments composant le dispsotif sera constituée de matière synthétique, de telle sorte que ceux-ci puissent être consumés au moins partiellement lors de l'allumage de la lance à oxygène 100.

**Revendications**

1. Dispositif pour l'allumage d'une lance à oxygène (100) du type formé d'un corps (10) présentant une extrémité susceptible d'ouverture pour être enfilé sur l'extrémité de la lance, et qui comprend un élément combustible et des moyens aptes à provoquer l'inflammation de l'élément combustible, caractérisé par le fait qu'il comprend un conteneur (15, 115) logé axialement dans le corps (10, 110) et fermé de façon étanche à ses deux extrémités, pour contenir un premier composé chimique (20, 120), un réservoir étanche (40, 140), contenant un second composé chimique (41, 141) apte à réagir avec le premier, en produisant une inflammation, lorsqu'il vient en contact avec celui-ci, et un organe de perforation (50, 150) susceptible de translation axiale relative par rapport au conteneur (15, 115) et/ou réservoir (40, 140) et, apte à perforer une paroi (70, 44; 170, 144) du conteneuer (15, 115) et dudit réservoir étanche (40, 140), pour mettre en contact les premier (20, 120) et second (41, 141) composés chimiques, lors du déplacement.

2. Dispositif selon la revendication 1, caractérisé par le fait que l'un des composés chimiques est un oxydant.

3. Dispositif selon la revendication 2, caractérisé par le fait que le premier composé chimique (20, 120) est une poudre oxydante.

4. Dispositif selon l'une des revendications 1 à 3, caractérisé par le fait que le conteneur (15, 115) ou le réservoir (40, 140) contiennent en outre un catalyseur pour favoriser la combustion desdits composés chimiques (20, 41; 120, 141) et accélérer l'allumage de la lance à oxygène (100).

5. Dispositif selon l'une des revendications 1 à 4, caractérisé par le fait que le conteneur (15) est obturé, du côté opposé à l'extrémité du corps (11) par laquelle la lance (100) est engagée, par une cape en matière synthétique (70) qui obture également l'extrémité correspondante du corps, de l'autre côté, par un disque (51) solidaire de l'organe de perforation (50), ce dernier possédant une portion (54) qui s'étend axialement dans le conteneur (15) et se termine en biseau au voisinage de ladite cape en matière synthétique (70).

6. Dispositif selon la revendication 5, caractérisé par le fait que le réservoir (40) est constitué d'un organe séparé, adapté pour être vissé sur le corps (10) en regard de la cape (70) en matière synthétique, et par le fait que l'extrémité du réservoir (40), adjacente en position assemblée à cette cape, en matière synthétique, est constituée d'un bouchon (44) en matière synthétique, muni de préférence d'une amorce de découpe.

7. Dispositif selon l'une des revendications 5 et 6, caractérisé par le fait que l'organe de perforation constitue un piston (50) de perforation déplaçable dans le corps (10).

8. Dispositif selon l'une des revendications 1 à 4, caractérisé par le fait que le réservoir (140) est réalisé dans le corps (110), à l'opposé de l'extrémité susceptible d'ouverture et est obturé, côté intérieur du corps, par un bouchon (144) en matière synthétique, tandis que le conteneur (115) est monté déplaçable dans le corps et est obturé par une cape (170) en matière synthétique à son extrémité adjacente au réservoir (140), et que l'organe de perforation (150) est porté fixe dans le réservoir (140).

9. Dispositif selon l'une des revendications 1 à 8, caractérisé par le fait que le composé chimique oxydant (20, 120) est du permanganate de potassium.

10. Dispositif selon la revendication 9, caractérisé par le fait que le catalyseur est du bioxyde de baryum.

11. Dispositif selon la revendication 9, caractérisé par le fait que l'autre composé chimique (41, 141) est un polyol tel que de l'éthylène glycol.

12. Dispositif selon l'une des revendications 1 à 11, caractérisé par le fait que l'extrémité du corps (10, 110) par laquelle la lance à oxygène (100) est introduite, est obturée initialement à l'aide d'un bouchon étanche amovible (82, 182).

13. Dispositif selon l'une des revendications 1 à 12, caractérisé par le fait que l'extrémité du corps (110) par laquelle la lance à oxygène (100) est introduite est munie d'une bague (193) de fixation de la lance dont le diamètre interne est adapté au diamètre extérieur de la lance.

**Patentansprüche**

1. Vorrichtung zum Zünden einer Sauerstofflanze (100), mit einem Körper (10), welcher ein Ende aufweist, welches geöffnet werden kann, um über das Ende der Lanze gezogen werden zu können, mit einem brennbaren Element sowie mit Einrichtungen, welche die Entzündung des brennbaren Elementes hervorrufen können, gekennzeichnet durch einen Behälter (15, 115), welcher axial im Körper (10, 110) gelagert ist und an seinen beiden Enden in abdichtender Weise abgeschlossen ist und eine erste chemische Verbindung (20, 120) beinhaltet, einen dichten Speicher (40, 140), welcher eine zweite chemische Verbindung (41, 141) beinhaltet, welche, wenn sie mit der ersten Verbindung in Kontakt tritt, unter Erzeugung einer Entzündung mit dieser reagieren kann, und durch ein Perforationsorgan (50, 150), welches in bezug auf den Behälter (15, 115) und/oder den Speicher (40, 140) axial verschiebbar ist und eine Wand (70, 44; 170, 144) des Behälters (15, 115) und des dichten Speichers (40, 140) durchbohren kann, um die erste (20, 120) und die zweite (40, 141) chemische Verbindung infolge der Verschiebung in Kontakt zu bringen.

2. Vorrichtung nach Anspruch 1, dadurch gekennzeichnet, dass eine der chemischen Verbindungen ein Oxydationsmittel ist.

3. Vorrichtung nach Anspruch 2, dadurch gekennzeichnet, dass die erste chemische Verbindung (20, 120) ein oxydierendes Pulver ist.

4. Vorrichtung nach einem der Ansprüche 1 bis 3, dadurch gekennzeichnet, dass der Behälter (15, 115) oder der Speicher (40, 140) weiters einen Katalysator zur Begünstigung der Verbrennung der chemischen Verbindungen (20, 41; 120, 141) und zur Beschleunigung der Zündung der Sauerstofflanze (100) aufweist.

5. Vorrichtung nach einem der Ansprüche 1 bis 4, dadurch gekennzeichnet, dass der Behälter (15) an der jenem Ende des Körpers (11), an dem die Lanze (100) angeschlossen ist, gegenüberliegenden Seite von einer Kappe (70) aus synthetischem Material abgeschlossen wird, welche andererseits auch die entsprechende Öffnung des Körpers über eine Scheibe (51) abschliesst, welche an das Perforationsorgan (50) befestigt ist, wobei dieses einen Abschnitt (54) aufweist, der axial im Behälter (15) verläuft und in der Nähe der Kappe aus synthetischem Material (70) schrägkantig abschliesst.

6. Vorrichtung nach Anspruch 5, dadurch gekennzeichnet, dass der Speicher (40) aus einem eigenen Organ gebildet ist, welches an der Kappe (70) aus synthetischem Material auf den Körper (10) aufschraubbar ist, und dass das lagemässig benachbarte, an die Kappe angebrachte Ende des Speichers (40) aus einem Verschlussstück (40) aus synthetischem Material gebildet ist, welches vorzugsweise mit einer Schnittzündung ausgestattet ist.

7. Vorrichtung nach einem der Ansprüche 5 oder 6, dadurch gekennzeichnet, dass das Perforationsorgan einen Perforationskolben (50) bildet, welcher im Körper (10) verschiebbar ist.

8. Vorrichtung nach einem der Ansprüche 1 bis 4, dadurch gekennzeichnet, dass der Speicher (140) im Körper (110) gegenüber dem zu öffnenden Ende ausgebildet ist und an der Innenseite des Körpers von einem Verschlussstück (144) aus synthetischem Material abgeschlossen wird, wogegen der Behälter (115) verschiebbar im Körper angebracht ist und an seinem an den Speicher (140) angrenzenden Ende von einer Kappe (170) aus synthetischem Material abgeschlossen wird, und dass das Perforationsorgan fest im Behälter (140) getragen wird.

9. Vorrichtung nach einem der Ansprüche 1 bis 8, dadurch gekennzeichnet, dass die oxydierende chemische Verbindung (20, 120) Kaliumpermanganat ist.

10. Vorrichtung nach Anspruch 9, dadurch gekennzeichnet, dass der Katalysator Bariumbioxid ist.

11. Vorrichtung nach Anspruch 9, dadurch gekennzeichnet, dass die andere chemische Verbindung (41, 141) ein Polyol wie Äthylenglykol ist.

12. Vorrichtung nach einem der Ansprüche 1 bis 11, dadurch gekennzeichnet, dass jenes Ende des Körpers (10, 110), über das die Sauerstofflanze (100) eingeführt wird, anfänglich mittels eines entfernbaren abdichtenden Verschlussstückes (82, 182) abgeschlossen wird.

13. Vorrichtung nach einem der Ansprüche 1 bis 12, dadurch gekennzeichnet, dass jenes Ende des Körpers (110), über welches die Sauerstofflanze (100) eingeführt wird, eine Hülse (193) zur Befestigung der Lanze aufweist, deren Innendurchmesser an den Aussendurchmesser der Lanze angepasst ist.

## Claims

1. A device for igniting an oxygen lance (100) of the type formed by a body (10) having one end capable of being opened for threading on the end of the lance and which comprises a fuel element and means capable of causing ignition of the fuel element, characterised in that it comprises a container (15, 115) housed axially in the body (10, 110) and closed in sealed manner at its two ends, for containing a first chemical compound (20, 120), a sealed reservoir (40, 140) containing a second chemical compound (41, 141) capable of reacting with the first while producing ignition when it comes in contact with it, and a perforation member (50, 150) capable of axial translation relative to the container (15, 115) and/or reservoir (40, 140) and capable of perforating a wall (70, 44; 170, 144) of the container (15, 115) and of said sealed reservoir (40, 140) for placing the first (20, 120) and second (41, 141) chemical compounds in contact during travel.

2. A device according to claim 1, characterised in that one of the chemical compounds is an oxidizing agent.

3. A device according to claim 2, characterised in that the first chemical compound (20, 120) is an oxidizing powder.

4. A device according to one of claims 1 to 3, characterised in that the container (15, 115) or the reservoir (40, 140) also contain a catalyst for promoting combustion of said chemical compounds (20, 41; 120, 141) and accelerating ignition of the oxygen lance (100).

5. A device according to one of claims 1 to 4, characterised in that the container (15) is blocked on the side opposite the end of the body (11) by which the lance (100) is engaged by a cover made of synthetic material (70) which also blocks the corresponding end of the body and on the other side by a disc (51) which is integral with the perforation member (50), the perforation member possessing a portion (54) which extends axially in the container (15) and ends with a bevel in the vicinity of said cover made of synthetic material (70).

6. A device according to claim 5, characterised in that the reservoir (40) is constituted by an separate member which is adapted to be screwed on the body (10) opposite the cover (70) made of synthetic material, and in that the end of the reservoir (40) adjacent, in the assembled position, to this cape made of synthetic material is constituted by a stopper (44) made of synthetic material and preferably equipped with a cutting primer.

7. A device according to one of claims 5 and 6, characterised in that the perforation member constitutes a perforation piston (50) which is movable in the body (10).

8. A device according to one of claims 1 to 4, characterised in that the reservoir (140) is produced in the body (110) opposite the end capable of opening and is blocked inside the body by a stopper (144) made of synthetic material where as the container (115) is mounted movably in the body and is blocked by a cover (170) made of synthetic material at its end adjacent to the reservoir (140) and in that the perforation member (150) is borne stationarily in the reservoir (140).

9. A device according to one of claims 1 to 8, characterised in that the oxidizing chemical compound (20, 120) is potassium permanganate.

10. A device according to claim 9, characterised in that the catalyst is barium bioxide.

11. A device according to claim 9, characterised in that the other chemical compound (41, 141) is a polyol such as ethylene glycol.

12. A device according to one of claims 1 to 11, characterised in that the end of the body (10, 110) by which the oxygen lance (100) is introduced is initially blocked by means of a removable sealed stopper (82, 182).

13. A device according to one of claims 1 to 12, characterised in that the end of the body (110) by which the oxygen lance (100) is introduced is equipped with a ring (193) for fixing the lance of which the internal diameter is adapted to the external diameter of the lance.

FIG_1

FIG_2

FIG_3

FIG_4

FIG_5

2/2

FIG. 6